# EUROPEAN PATENT SPECIFICATION

(11) **EP 1 267 555 B1**
(45) Date of publication and mention of the grant of the patent: **01.08.2007**
(21) Application number: 02253977.9
(22) Date of filing: 07.06.2002
(51) Int. Cl.: H04M 3/22, H04M 7/00, H04B 17/00, H04L 12/26, H04M 3/26

(54) **Measuring speech quality**
Sprachqualitätsprüfung
Mesure de la qualité de parole

(30) Priority: 14.06.2001 US 881441
(43) Date of publication of application: 18.12.2002
(73) Proprietor: Nortel Networks Limited, St Laurent, Québec H4S 2A9 (CA)
(72) Inventor: Keane, Michael, Sligo (IE); Moran, Thomas, Kingston, Galway City (IE)
(74) Representative: Hermele, Daniel Stephen

(56) References cited:
- EP-A- 0 910 200
- EP-A- 1 075 129
- WO-A-01/93470
- WO-A-02/03633
- WO-A-02/37694
- US-A- 5 987 320

## Description

### FIELD OF THE INVENTION

The present invention relates to a method and apparatus for measuring speech quality of a voice call. The invention is particularly related to, but in no way limited to, measuring the speech quality of voice over internet protocol calls using a PESQ algorithm.

### BACKGROUND TO THE INVENTION

Voice over internet protocol (VoIP) implementations enable voice traffic such as telephone calls and faxes to be carried over an internet protocol communications network. Such implementations are advantageous because they provide lower cost long distance telephone calls (as compared with telephone calls made over public switched telephone networks for example). In addition, it is possible to merge data and voice communications network infrastructures thus providing economies of scale and increased coverage as well as unified messaging and other services.

During a VoIP telephone call, the voice signal from a user is processed by a digital signal processor and then compressed before being stored in packets that are suitable for being transported using internet protocol in compliance with one of the specifications for transmitting multimedia (voice, video, fax and data) across a communications network. The packets are transmitted across a communications network to a called party for example, using real time transport protocol (RTP). When the packets are received at their destination, the voice signal is decompressed before being played to a called party. The specific path that the packets take over the communications network is not specified and can be any suitable path that is available. Thus, several different VoIP calls between the same destinations may take different actual paths over the communications network.

Any suitable compression/decompression scheme is used, and these are referred to as coder-decoder compression schemes (CODECs).

One issue for packet based voice calls is how to provide speech quality levels that are comparable or better than those provided on public switched telephone networks. Speech quality in packet calls is affected by many factors such as delay, jitter, packet loss and CODEC performance.

A need thus arises for meaningful measures of speech quality to be provided that are simple and inexpensive to calculate and which do not themselves increase network load. For example, service providers may enter into contracts with customers to provide specified levels of speech quality between specified end points. In order for both the service provider and customer to ensure that the contract is being met, a measure of speech quality is needed.

Many different measures exist for speech quality. For example, the number of packets dropped can be monitored and used as an indicator of speech quality. However, speech quality is in the end perceived by human users and so subjective measures of speech quality have been developed. Mean Opinion Score (MOS) is one such subjective measure of speech quality which is obtained by obtaining judgements from a wide range of listeners. Those listeners hear a voice sample from a particular CODEC and rate their perception of that voice sample on a scale of 1(bad) to 5(excellent). These types of subjective tests are of course time consuming and costly to carry out.

Many other measures of speech quality exist. For example perceptual speech quality measure (PSQM) is an objective measure of speech quality that is obtained by transmitting a test voice signal through a codec encode and decode, and then comparing the result with the original. However, PSQM is not able to take proper account of filtering, variable delay and short localised distortions that can occur in packet switched networks, so it is not suitable for end to end speech quality measurement. PSQM is described in detail in International Telecommunication Union (ITU) recommendation P.861. More recently, an algorithm, known as perceptual evaluation of speech quality (PESQ) has been developed, which is capable of taking proper account of filtering, variable delay and short localised distortions. Hence, this algorithm is appropriate for end to end measurement over packet switched networks. PESQ provides an estimated MOS of the speech quality and is the subject of draft ITU recommendation P.862. Further details of the PESQ alborithm are given in "PESQ - the new ITU standard for end-to-end speech quality assessment", Published at 109th AUDIO ENGINEERING SOCIETY Convention, 2000 September 22-25 Los Angeles, California, USA. Authors: Antony W. Rix, John G. Beerends, Michael P. Hollier and Andries P. Hekstra. PESQ related information is also given in International Patent Publication No. WO 00/22803 which describes an apparatus for measurement of speech signal quality.

When the PESQ or similar algorithms are used to measure speech quality, a dedicated voice call is set up to transmit only test speech signals over a communications network. This enables the test voice signals to be easily identified and provides a means of determining the amount of degradation that occurs as a result of transmission over the network. However, it is known that network parameters such as packet loss and packet delay are significantly variable for many packet switched networks. Therefore, the results from a single test call over a packet swiched network cannot be assumed to reflect the speech quality between the end-points on another occasion.

Another method of evaluating speech quality is referred to as the "E model" and is defined in ITU-T recommendation G.107. The E model is a computational model for determining the combined effect of various parameters on speech quality. The model evaluates the end-to-end network transmission performance and outputs a scalar rating "R" for the network transmission quality. The model further correlates the network objective measure, "R", with the subjective QoS metric for speech quality, MOS. The value of R depends on a wide range of factors such as sending loudness rating, receiving loudness rating, sidetone masking rating, listener sidetone rating, send side D-value of telephone, talker echo loudness rating and many other such factors.

The ITU-T E-Model is an analytical tool for estimating the speech quality of end-to-end telephone connections. It is primarily a transmission planning tool rather than a rigorous psycho-acoustic model. As such it is not well suited to MOS estimation on individual session. For example, it is known that a sudden burst of lost packets can seriously degrade the speech quality over a VOIP network. However, if there is no other packet loss over the duration in which the percentage packet loss is calculated, the percentage packet loss can be low enough that the E-model predicts a high MOS value. The non-linear effects associated with jitter buffering can also cause inaccuracy in the E-model MOS prediction. Generally, a packet arriving at a jitter buffer much later than it was expected cannot be used to regenerate the output speech. Hence this packet is effectively lost, as far as speech quality is concerned. However, when calculating the percentage of lost packets, this packet is not lost, so in this case the E-model overestimates the speech quality.

Earlier co-pending US patent application number 09/680,829 which is also assigned to Nortel Networks, describes a method of obtaining a measure of speech quality during a voice call and displaying that measure on the telephone handsets of the calling and called parties. This provides the advantage that end users are able to see at a glance a measure of the speech quality of a call. In US 09/680,829 the measure of speech quality is obtained by transmitting dummy test packets which do not contain speech or voice information from a source server to a destination server and back with the aim of measuring the average packet delay and the percentage of packets lost. These parameters are then input to an E-model, in order to generate an estimated MOS score. This estimated MOS score may be output to a display unit, for example, on a telephone handset. Whilst the system and method of US 09/680,829 are satisfactory and operable the present invention addresses additional and/or different problems.

One problem with many previous algorithms for measuring speech quality is that because test packets are sent as part of a separated IP session, they may take a different route through the connectionless packet network than the packets of the ongoing voice call. This means that the test packets may be degraded as a result of transmission through the network in a different manner than the packets of the ongoing voice call.

WO 98/53589 describes a system for simulating a conversation over a non-perfect communications link and to measure received signal quality for the simulated conversation. The system seeks to take into account the reaction of users to the system's behaviour which can influence the way the system performs. This approach involves making a call for test purposes only and does not consider the particular problems involved for packet -based, connection less communication networks.

EP 1 075 129 A1 describes a test method for computer telephony in which a test application sends a test signal to a soundcard driver which injects the test signal into computer telephony packets. US 5.987,320 describes a quality measurement method for a wireless network which transmits a test sentence stored within a TDM base band test signal and compares this with corresponding reference test sentence stored at a receiving apparatus.

An object of the present invention is to provide a method of measuring speech quality of a voice call which overcomes or at least mitigates one or more of the problems noted above.

Another object of the present invention is to generate an improved estimated MOS score which is suitable for output to a display unit, for example, on a telephone handset. In this respect, the present invention seeks to extend and develop the work described in US patent application no 09/680,629.

Further benefits and advantages of the invention will become apparent from a consideration of the following detailed description given with reference to the accompanying drawings, which specify and show preferred embodiments of the invention.

### SUMMARY OF THE INVENTION

The invention provides a method of enabling speech quality to be measured as defined in claim 1; a method of measuring speech quality for a call as defined in claim 4; a packet-based communications network node as defined in claim 9 and as defined in claim 10; and a signal for a voice call as claimed in claim 7.

According to an example of the present invention there is provided a method of measuring the speech quality of a voice call between a first node and a second node in a packet-based communications network. Each of the first and second nodes comprises the same stored test voice information and the method comprises the steps of, at the first node:
- receiving packets for the voice call and adding at least part of the stored test voice information to at least some of the packets;
- forwarding the packets to the second node; and
- at the second node, accessing the test voice information stored at the second node and comparing it with the test voice information received in the packets using a speech quality assessment algorithm in order to obtain a measure of speech quality for the voice call.

For example, each of the first and second nodes have the same pre-stored test vectors comprising test voice information. The first node sends these test vectors to the second node as part of a live voice call. The second node receives the test vectors and is able to compare them with the pre-stored test vectors to determine how much degradation has taken place as a result of transmission through the network.

This provides the advantage that because the test voice information is sent as part of a live voice call itself, any degradation experienced by the test voice information Is closely associated with that experienced by actual voice information in the voice call Itself. This enables a measure of speech quality to be obtained for the particular voice call. In contrast to previous methods, which transmit test packets in order to measure the packet loss percentage and then derive an estimate of the speech quality MOS, this method derives the speech quality estimate from test speech that is embedded in the voice call itself.

Another advantage is that because the speech quality measure is specific to a particular call, it is possible to relate user reported issues to an exact quantitative measurement for the exact call in which the user has experienced those issues.

In an example, some of the packets received at the first node comprise voice information associated with the voice call and others of those packets are associated with periods when speech is absent from the voice call. In that case, said step (i) further comprises identifying those packets which are associated with periods when speech is absent from the voice call and adding test voice information to one or more of those packets. This enables the test vectors to be incorporated into a live voice call without disrupting or otherwise adversely affecting that live voice call. The test vectors are incorporated into "silent periods" in the live voice call (i.e. periods during which no speech takes place).

For example the packet-based communications network is an internet protocol communications network. However, this is not essential, other types of packet-based communications network may be used such as wireless local area network (LAN), global system for mobile communications (GSM) or third generation (3G) networks. The invention is especially useful in packet-based communications networks where packet loss is a significant problem.

In one example, the method further comprises making an indication in a header of each of those packets to which test voice information is added. This enables the second node to identify packets containing test voice information. If the second node is at an endpoint the test voice packets are separated from the packets containing the "live" voice information. The "live" voice information packets are forwarded to a CODEC and processed as is known in the art.

For example, the indication is a payload value and the packets are real-time transport protocol (RTP) packets. Advantageously, the RTP protocol provides that some payload values may be user defined. Payload values can then be used to enable the second node to identify those packets which contain test voice information in a manner which requires no changes to be made to the existing RTP protocol and enables existing network equipment that is configured for use with RTP to be used.

In one example, the packets are forwarded from the first node to the second node via one or more other nodes which do not have access to information about the pre-specified identifier. For example, communications network nodes which have no knowledge of the particular user defined payload value for identifying test voice packets, simply forward those packets as they would do for any other voice packets. Existing protocols such as RTP are arranged to do this and this provides the advantage that information about the user defined payload value only needs to be provided to those network nodes at which it is required to make speech quality assessments.

In one embodiment the first and second nodes are located substantially at the edge of the communications network. This provides the advantage that speech quality assessments are made without needing to adjust or adapt core network nodes in any manner. However, this is not essential.

If speech quality assessments are required at the core of the network, the first and or second nodes may be at the core of the network.
In an example the speech quality assessment algorithm Is a PESQ algorithm. This provides the advantage that an estimated MOS score is provided for a "live" voice call that is determined using test voice information that has been transmitted Integrally with that "live" voice call.

According to another example of the present invention there is provided a signal for a voice call provided over a packet-based communications network, said signal comprising a plurality of packets at least some of which comprise test voice information, and characterised In that the packets are real-time transport protocol (RTP) packets and some of the packets are generated In periods when speech is absent from the voice call and comprise test voice information. For example, the voice call is a live voice call and as described above, because the test voice information is transmitted integrally with the live voice call, that test voice information can then be used to determine an accurate assessment of the quality of the live voice call. The use of packets generated In periods when speech is absent from the voice call enables test voice information to be transmitted integrally with a live voice call, without affecting that live voice call. For example, the packets are real-time transport protocol packets and some of the packets comprise a header with an indicator, indicating that those packets comprise test voice information. This enables a network node which receives the signal to identify those packets which contain test voice information.

According to another example of the invention there is provided a packet-based communications network node (A) arranged to enable speech quality to be measured for a voice call which is ongoing between a caller (10) and a called party (12) over a packet based communications network comprising:
i) an input arranged to receive packets for the voice call;
ii) a processor (23) arranged to add test voice information to one or more of the packets;
iii) an output arranged to forward the packets towards the called party
and said node being characterised in that the packets are real-time transport protocol (RTP) packets and some of the received packets comprise voice information associated with the voice call and others of those packets are associated with periods when speech is absent from the voice call and in that the processor (23) is further arranged to identify those packets which are associated with periods when speech is absent from the voice call and add test voice information to one or more of those packets.

For example, the network node receives packets from a CODEC, adds test speech which has been encoded with a similar but separate CODEC to some of those packets and forwards the packets to the called party. This enables test voice information to be transmitted integrally with a live voice call.

According to another example of the present invention there is provided a packet-based communications network node (B) arranged to measure speech quality for a call which is ongoing between a caller and a called party over a packet based communications network comprising:
i) an input arranged to receive packets as part of the voice call some of which comprise voice information associated with the voice call and some of which comprise received test voice information;
ii) means for Identifying packets carrying test voice information;
iii) means for extracting said received test voice information from the identified packets;
   and said node being characterised in that the packets are real-time transport protocol RTP packets and in that test voice information is carried in packets generated in periods when speech Is absent from the voice call and in that the node further comprises:
iv) means adapted to store test voice information (21);
v) a processor (22) arranged to compare the received test voice information and the stored test voice information using a speech quality assessment algorithm in order to obtain a measure of speech quality for the voice call.

This communications network node may be located at the core or at the edge of the communications network depending on where it is required to obtain an estimate of speech quality.

According to another example of the present invention there is provided a method of measuring speech quality for a call which is ongoing over a packet based communications network, said method comprising, at a node (B) of the network:
i) receiving packets (40) as part of the voice call, some of which comprise voice information associated with the voice call and some of which comprise received test voice information;
ii) identifying those packets carrying said received test voice information; and
iii) extracting said received test voice information;
   said method characterised in that:
   the packets are real-time transport protocol RTP packets and In that the received test voice information is carried in packets generated in periods when speech is absent from the voice call and in that the method further comprises:
      iv) accessing stored test voice information; and
      v) comparing the received test voice information and the accessed stored test voice information using a speech quality assessment algorithm (42) in order to obtain a measure of speech quality for the voice call.

According to another example of the present invention there is provided a method of enabling speech quality to be measured for a voice call which is ongoing between a caller and a called party over a packet based communications network, said method comprising, at a node (A) of the network:
i) receiving packets for the voice call;
ii) adding (32) test voice information to one or more of the packets;
iii) forwarding (33) the packets towards the called party
   and said method being characterised in that said packets are real-time transport protocol (RTP) packets and in that some of the received packets comprise voice information associated with the voice call and others of those packets are associated with periods when speech is absent from the voice call and in that said step II) further comprises identifying (31, 32) those packets which are associated with periods when speech is absent from the voice call and adding test voice information to one or more of those packets.

According to another example of the present invention there is provided computer program computer program code adapted to perform all of the steps of the methods at node (A) or node (B) when the program Is run on a computer. The computer program may be embodied on a computer readable medium.

### BRIEF DESCRIPTION OF THE DRAWINGS

In order to show how the invention may be carried into effect, embodiments of the invention are now described below by way of example only and with reference to the accompanying figures in which:
Figure 1 is a schematic diagram of a packet-based communications network comprising communications network nodes modified for use in the present invention;
Figure 2 is a schematic diagram of two of the communications network nodes of Figure 1 in more detail;
Figure 3 is a flow diagram of a method carried out by one of the communications terminals nodes of Figure 2;
Figure 4 is a flow diagram of a method carried out by the other communications network node of Figure 2;

### DETAILED DESCRIPTION OF INVENTION

Embodiments of the present invention are described below by way of example only. These examples represent the best ways of putting the invention into practice that are currently known to the Applicant although they are not the only ways in which this could be achieved.

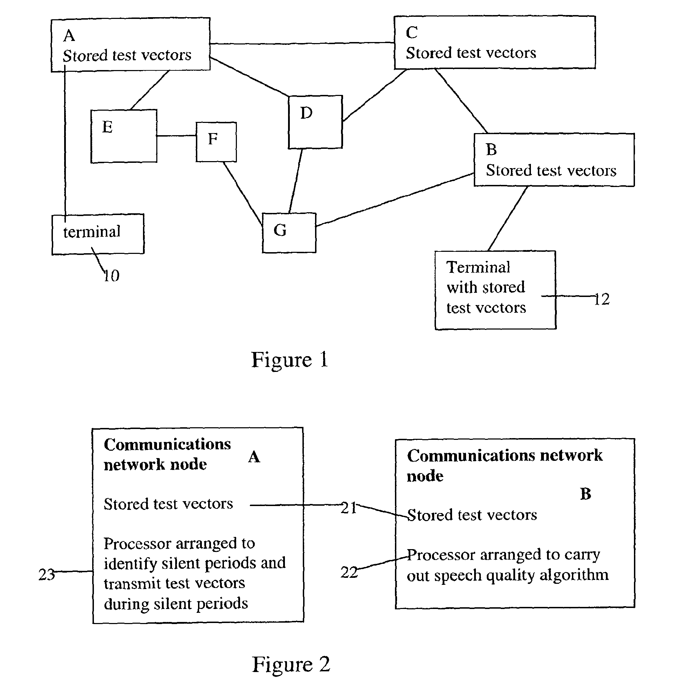

Figure 1 is a schematic diagram of a packet-based communications network comprising communications network nodes (A, B, C) modified for use in the present invention. At nodes A, B and C, test voice information is stored which is the same at each node. For example, this test voice information comprises test vectors. Other nodes D, E, F and G do not have this stored test voice information. A user terminal 10 is shown connected to node A and another user terminal 12 connected to node B. The user terminal 12 connected to node B also has the stored test voice information whilst the other user terminal 10 does not.

Figure 2 shows the structure of nodes A and B in more detail. Both node A and node B comprise a memory with stored test voice information 21 such as test vectors. In addition nodes A and B each have a processor 22, 23 which is arranged in a particular way. In this example, node A's processor 23 is arranged to add test vectors to an ongoing voice call whilst node B's processor 22 is arranged to carry out a speech quality algorithm. It is possible for nodes A and B to have identical processors which are arranged to carry out both these functions.

Consider a voice call from terminal 10 to terminal 12. This call passes from node A to node B and the actual packets of the call may travel via different routes between those two nodes. For example, from A to E, F, G and then B or from A to C to B. The voice call is achieved using voice over internet protocol technology or any other suitable method for achieving a voice call over a packet-based communications network as is known in the art. For example, an internet protocol communications network is used with an RTP session being set up between A and B for the voice call.

When a voice call is ongoing between terminal 10 and terminal 12, node A is arranged to add stored test voice information to some of the packets of that call. Preferably, node A comprises a processor which is arranged to identify silent periods during the voice call and to add packets comprising test voice information to the call during those silent periods. Note that the test speech must also pass through a codec, if one is used. In this way, some of the packets comprise only test voice information whilst other packets comprise only "real" voice information for the live voice call. However, this is not essential. The test voice information may be incorporated into packets which comprise "real" voice information as long as means is provided to enable node B to distinguish between these two types of information.

For packets comprising test voice information, node A is arranged to include an indicator in the header of those packets to indicate that they comprise test voice information. For example, if the packets conform to the RTP protocol, this indicator may be a pre-specified payload type value. Node B has knowledge of this pre-specified payload type value in order that it is able to separate the test voice information packets from the packets containing real voice information. However, it is not essential to use a payload type value as the indicator. Any other suitable type of indicator may be used.

Node A transmits the packets for the voice call, including those comprising test voice information, to node B in the usual manner as specified by the particular protocol being used for the call (for example, RTP). These packets follow any of the possible routes between A and B and in doing so may pass through nodes which do not have any knowledge of the indicator used to identify those packets comprising test voice information (for example, nodes D, E, F and G in Figure 1). Those nodes are arranged to simply ignore any such identifiers and forward the packets in the normal manner. For example, in the case that RTP is used and the indicator is a payload type value, nodes which encounter an unknown payload type value are arranged to forward those packets and take no further action.

Individual packets for the voice call between A and B may take different routes between A and B as explained above. This means that the packets comprising test voice information may follow different routes from the packets comprising the voice information for the ongoing voice call. However, because the packets are all sent as part of the same voice call (for example, as part of the same RTP session), the test voice information packets experience approximately the same effects from transmission through the network as do the real voice information packets. This provides the advantage that an improved assessment of the amount of degradation experienced by the voice call is obtained. Previous methods that have used dummy test packets (which contain no test or real speech information) to measure percentage packet loss provide a different type of assessment. Other types of previous method have used dedicated calls for test speech to enable end to end testing. In that case the test speech does not enable an accurate assessment of a particular voice call as in the present invention. In addition, many dedicated voice terminals can handle only one call at a time, so a separate call for test speech is not possible.

Node B receives the packets and using its knowledge of the identifier is able to separate the received test voice information from the "real" voice information. The received test voice information is input to a speech quality assessment algorithm together with the stored test voice information, stored at node B. The speech quality assessment algorithm produces a measure of the speech quality of the particular voice call. For example, this may comprise an estimated MOS score. Any suitable speech quality measurement algorithm may be used as described above although, in a preferred embodiment the PESQ algorithm is used. The speech quality measurement algorithm used needs to be able to generate an estimate of speech quality by comparing test speech signals with speech signals that have been transmitted over a packet switched network and may have been subject to effects such as filtering and variable delay.

Once a measure of the speech quality of the particular voice call is obtained this information is provided to a user (such as the network operator, service provider and or end user) in any suitable manner. For example, the measure may be displayed on a display screen at terminal 10 and terminal 12. The information may also be sent to a network management system. This enables a service provider to monitor the quality of service being provided and to make adjustments to the network as necessary. The measure is preferably provided in real time and is directly related to a specific call as described above.

It is not essential for node A in Figure 1 to add test voice information to all calls from node A. For example, only 5% of calls may be assessed for speech quality using the method described herein. If low levels of speech quality are detected this percentage can then be increased.

It is also possible for a terminal itself to carry out the functions of nodes A and or B. For example, node 12 in Figure 1 is shown as having stored test vectors.

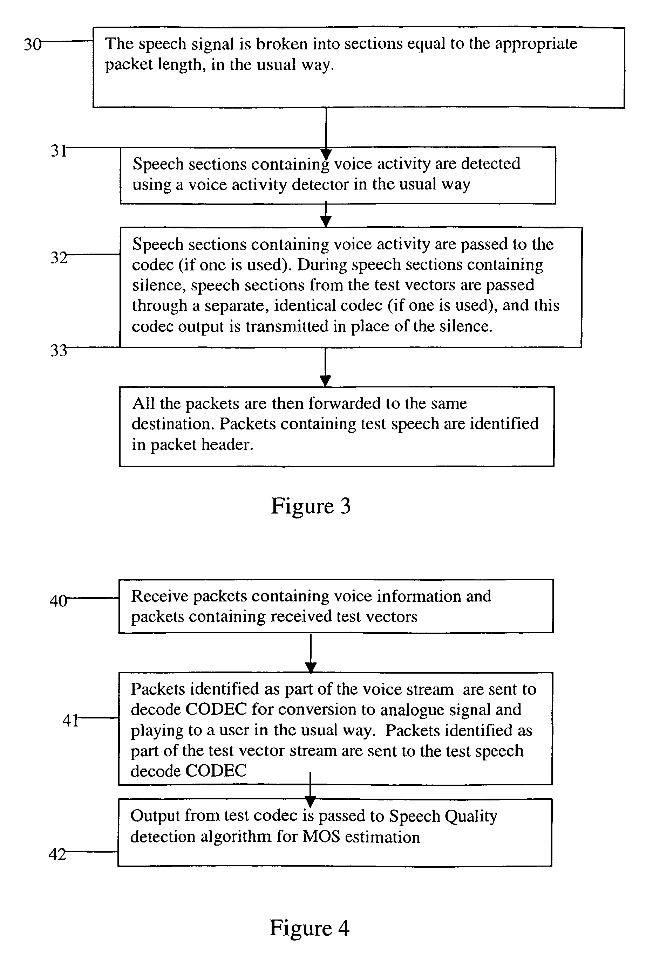

Figure 3 is a flow diagram of a method carried out by node A in Figure 1 or of any other suitable node which issues test voice information (test vectors). At that node, the speech signal is broken into sections equal to the appropriate packet length, in the usual way. (see box 30).

Speech sections containing voice activity are detected using a voice activity detector in the usual way (see box 31). Speech sections containing voice activity are passed to the codec (if one is used). During speech sections containing silence, speech sections from the test vectors are passed through a separate, identical codec (if one is used), and that codec's output is transmitted in place of the silence (see box 32). This results in some packets containing test vectors and no voice activity and other packets containing voice activity and no test vectors. However, this is not essential. Some packets may contain both test vectors and actual voice activity, provided that means is provided for later identifying the two types of information.

Note that although packets containing the test vector have thus been embedded into the packet stream, they are identified with a different payload type in the packet header. All the packets are then forwarded to the same destination (see box 33).

Figure 4 is a flow diagram of a method carried out by node B in Figure 1 or of any other suitable node which receives test voice information and carries out a speech quality assessment algorithm. The node receives packets comprising voice information and packets comprising received test vectors (see box 40 of Figure 4) and can identify each from the packet header.

Packets identified as part of the voice stream are sent to decode CODEC for conversion to analogue signal and playing to a user (see box 41) in the usual way. Packets identified as part of the test vector stream are sent to the test vector decode CODEC and then to the speech quality algorithm (see box 42) for MOS estimation. Thus the test speech passes through codec encode and decode. This means that the MOS score includes codec effects.

In order to take account of degradation that occurs as a result of CODEC processing, the test speech is also processing using a CODEC in the same way as the actual speech. A separate CODEC is used for the test speech in order that the CODEC used for the real speech is not affected. Preferably the additional CODEC for the test speech is operated during periods when the CODEC for the real speech is inactive. In this way real-time requirements are not affected.

Any range or device value given herein may be extended or altered without losing the effect sought, as will be apparent to the skilled person for an understanding of the teachings herein.

A range of applications are within the scope of the invention. These include situations in which it is required to assess the speech quality of a voice call over a packet-based communications network.

## Claims

1. A method of enabling speech quality to be measured for a voice call which is ongoing between a caller and a called party over a packet based communications network, said method comprising, at a node (A) of the network:
i) receiving packets for the voice call;
ii) adding (32) test voice information to one or more of the packets;
iii) forwarding (33) the packets towards the called party
and said method being **characterised in that** said packets are real-time transport protocol RTP packets and **in that** some of the received packets comprise voice information associated with the voice call and others of those packets are generated in periods when speech is absent from the voice call and **in that** said step ii) further comprises identifying (31, 32) those packets which are generated in periods when speech is absent from the voice call and adding test voice information to one or more of those packets.

2. A method as claimed in claim 1 wherein step ii) further comprises making an indication in a header of each of those packets to which test voice information is added.

3. A method as claimed in claim 2 wherein said indication is a payload value.

4. A method of measuring speech quality for a call which is ongoing over a packet based communications network, said method comprising, at a node (B) of the network:
i) receiving packets (40) as part of the voice call some of which comprise voice information associated with the voice call and some of which comprise received test voice information;
ii) identifying those packets carrying said received test voice information; and
iii) extracting said received test voice information from the identified packets said method **characterised in that**:
the packets are real-time transport protocol RTP packets and **in that** the received test voice information is carried in packets generated In periods when speech is absent from the voice call and **In that** the method further comprises:
iv) accessing stored test voice information; and
v) comparing the extracted test voice information and the accessed stored test voice information using a speech quality assessment algorithm (42) in order to obtain a measure of speech quality for the voice call.

5. A method as claimed In claim 4 which further comprises, identifying which of the received packets comprise test voice information by determining whether a pre-specified identifier is present in a header of each of the packets.

6. A method as claimed in claim 4 or claim 5 wherein said speech quality assessment algorithm Is a PESQ algorithm.

7. A signal for a voice call provided over a packet-based communications network, said signal comprising a plurality of packets at least some of which comprise test voice information, and **characterised in that** the packets are real-time transport protocol RTP packets and some of the packets are generated in periods when speech is absent from the voice call and comprise test voice information.

8. A signal as claimed In claim 7 wherein some of the packets comprise a header with an indicator, indicating that those packets comprise test voice information.

9. A packet-based communications network node (A) arranged to enable speech quality to be measured for a voice call which is ongoing between a caller (10) and a called party (12) over a packet based communications network comprising:
i) an input arranged to receive packets for the voice call;
ii) a processor (23) arranged to add test voice information to one or more of the packets;
iii) an output arranged to forward the packets towards the called party
and said node being **characterised in that** the packets are real-time transport protocol RTP packets and some of the received packets comprise voice information associated with the voice call and others of those packets are generated in periods when speech is absent from the voice call and **in that** the processor (23) is further arranged to identify those packets which are generated in periods when speech is absent from the voice call and add test voice information to one or more of those packets.

10. A packet-based communications network node (B) arranged to measure speech quality for a call which Is ongoing between a caller and a called party over a packet based communications network comprising:
i) an input arranged to receive packets as part of the voice call some of which comprise voice information associated with the voice call and some of which comprise received test voice information;
ii) means for identifying packets carrying test voice information;
iii) means for extracting said received test voice information from the identified packets;
and said node being **characterised in that** the packets are real-time transport protocol RTP packets and **in that** test voice information is carried In packets generated In periods when speech is absent from the voice call and **in that** the node further comprises:
iv) means adapted to store test voice information (21);
v) a processor (22) arranged to compare the extracted test voice information and the stored test voice information using a speech quality assessment algorithm in order to obtain a measure of speech quality for the voice call.

11. A communications network comprising a first node as claimed in claim 9 and a second node as claimed in claim 10.

12. A computer program comprising computer program code adapted to perform all of the steps of the method of claim 1 when the program is run on a computer.

13. A computer program as claimed in claim 12 embodied on a computer readable medium.

14. A computer program comprising computer program code adapted to perform all of the steps of the method of claim 4 when the program is run on a computer.

15. A computer program as claimed In claim 14 embodied on a computer readable medium.

## Patentansprüche

1. Verfahren zur Ermöglichung einer Messung der Sprachqualität für eine Sprachverbindung, die zwischen einem Anrufer und einem angerufenen Teilnehmer über ein paketbasiertes Kommunikationsnetzwerk abläuft, wobei das Verfahren an einem Knoten (A) des Netzwerkes Folgendes umfasst:
i) Empfangen von Paketen für die Sprachverbindung;
ii) Hinzufügen (32) einer Test-Sprachinformation zu einem oder mehreren der Pakete;
iii) Weiterleiten (33) der Pakete in Richtung auf den angerufenen Teilnehmer;
wobei das Verfahren **dadurch gekennzeichnet ist, dass** die Pakete Echtzeit-Transportprotokoll-, RTP-, Pakete sind und dass einige der empfangenen Pakete der Sprachverbindung zugeordnete Sprachinformation umfassen und andere dieser Pakete in Perioden erzeugt werden, zu denen Sprache in der Sprachverbindung fehlt, und dass der Schritt ii) weiterhin die identifikation (37, 32) derjenigen Pakete, die in Perioden erzeugt werden, in denen Sprache in der Sprachverbindung fehlt, und die Hinzufügung von Test-Sprachinformation zu einem oder mehreren dieser Pakete umfasst.

2. Verfahren nach Anspruch 1, bei dem der Schritt ii) weiterhin die Ausbildung einer Anzeige in einem Kopffeld jedes derjenigen Pakete umfasst, zu denen die Test-Sprachinformation hinzugefügt wird.

3. Verfahren nach Anspruch 2, bei dem die Anzeige ein Nutzdaten-Wert ist.

4. Verfahren zur Messung der Sprachqualität für eine Verbindung, die über ein paketbasiertes Kommunikationsnetzwerk abläuft, wobei das Verfahren an einem Knoten (B) des Netzwerkes Folgendes umfasst:
i) Empfangen von Paketen (40) als Teil der Sprachverbindung, wobei einige der Pakete der Sprachverbindung zugeordnete Sprachinformation umfassen und einige der Pakete Test-Sprachinformation umfassen;
ii) Identifizieren derjenigen Pakete, die die empfangene Test-Sprachinformation übertragen; und
iii) Ableiten der empfangenen Test-Sprachinformation aus den identifizierten Paketen;
wobei das Verfahren **dadurch gekennzeichnet ist, dass**:
die Pakete Echtzeit-Transportprotokoll-, RTP-, Pakete sind, und dass die empfangene Test-Sprachinformation in Paketen übertragen wird, die in Perioden erzeugt wird, zu denen Sprache in der Sprachverbindung fehlt, und dass das Verfahren weiterhin Folgendes umfasst:
iv) Zugriff auf gespeicherte Test-Sprachinformation; und
v) Vergleichen der abgeleiteten Test-Sprachinformation und der erfassten gespeicherten Test-Sprachinformation unter Verwendung eines 5prachciualitäts-Abschätzalgorithmus (42) zum Gewinnen eines Maßes der Sprachqualität für die Sprachverbindung.

5. Verfahren nach Anspruch 4, das weiterhin die Identifikation, welche der empfangenen Pakete Test-Sprachinformation umfassen, durch Feststellen umfasst, ob eine vorher festgelegte identifikation in einem Kopffeld jedes der Pakete vorhanden ist.

6. Verfahren nach Anspruch 4 oder 5, bei dem der Sprachqualitäts-Abschätzalgorithmus ein PESQ-Algorithmus ist.

7. Signal für eine Sprachverbindung, die über ein paketbasiertes Kommunikationsnetzwerk bereitgestellt wird, wobei das Signal eine Vielzahl von Paketen umfasst, von denen zumindest einige Test-Sprachinformation umfassen,
**dadurch gekennzeichnet, dass** die Pakete Echtzeit-Transportprotokoll-, RTP-, Pakete sind, und dass einige der Pakete in Perioden erzeugt werden, in denen Sprache aus der Sprachverbindung fehlt, und Test-Sprachinformation umfassen.

8. Signal nach Anspruch 7, bei dem einige der Pakete ein Kopffeld mit einer Anzeige umfassen, die anzeigt, dass diese Pakete Test-Sprachinformation umfassen.

9. Paketbasierter Kommunikationsnetzwerk-Knoten (A), der zur Ermöglichung einer Messung der Sprachqualität für eine Sprachverbindung ausgebildet ist, die zwischen einem Anrufer (10) und einem angerufenen Teilnehmer (12) über ein paketbasiertes Kommunikationsnetzwerk abläuft, mit:
i) einem Eingang, der zum Empfang von Paketen für die Sprachverbindung angeordnet ist;
ii) einem Prozessor (23), der zur Hinzufügung von Test-Sprachinformation zu einem oder mehreren der Pakete ausgebildet ist;
iii) einem Ausgang, der zur Weiterleitung der Pakete in Richtung auf den angerufenen Teilnehmer angeordnet ist,
wobei der Knoten **dadurch gekennzeichnet ist, dass** die Pakete Echtzeit-Transportprotokoll-, RTP-, Pakete sind und einige der empfangenen Pakete der Sprachverbindung zugeordnete Sprachinformation umfassen und andere dieser Pakete in Perioden erzeugt werden, in denen Sprache in der Sprachverbindung fehlt, und dass der Prozessor (23) weiterhin so ausgebildet ist, dass er diejenigen Pakete identifiziert, die in Perioden erzeugt werden, in denen die Sprache in der Sprachverbindung fehlt, und Test-Sprachinformation zu einem oder mehreren dieser Pakete hinzufügt.

10. Paketbasierter Kommunikationsnetzwerk-Knoten (B), der zur Messung der Sprachqualität für eine Sprachverbindung ausgebildet ist, die zwischen einem Anrufer und einem angerufenen Teilnehmer über ein paketbasiertes Kommunikationsnetzwerk abläuft, mit:
i) einem Eingang, der zum Empfang von Paketen als Teil der Sprachverbindung angeordnet ist, von denen einige Sprachinformation, die der Sprachverbindung zugeordnet ist, und einige empfangene Test-Sprachinformation umfassen;
ii) Einrichtungen zur Identifikation von Paketen, die Test-Sprachinformation übertragen;
iii) Einrichtungen zur Ableitung der empfangenen Test-Sprachinformation aus den identifizierten Paketen;
wobei der Knoten **dadurch gekennzeichnet ist, dass** die Pakete Echtzeit-Transportprotokoll-, RTP-, Pakete sind, und dass die Test-Sprachinformation in Paketen übertragen wird, die in Perioden erzeugt werden, zu denen Sprache in der Sprachverbindung fehlt, und dass der Knoten weiterhin Folgendes umfasst:
iv) Einrichtungen zum Speichern von Test-Sprachinformation (27);
v) einen Prozessor (22), der zum Vergleich der abgeleiteten Test-Sprachinformation und der gespeicherten Test-Sprachinformation unter Verwendung eines Sprachqualitäts-Abschätzungsalgorithmus angeordnet ist, um ein Maß der Sprachqualität für die Sprachverbindung zu gewinnen.

11. Kommunikationsnetzwerk mit einem ersten Knoten nach Anspruch 9 und einem zweiten Knoten nach Anspruch 10.

12. Computerprogramm, das Computerprogramm-Code umfasst, der zur Ausführung aller der Schritte des Verfahrens nach Anspruch 1 ausgebildet ist, wenn das Programm auf einem Computer abläuft.

13. Computerprogramm nach Anspruch 12, das auf einem Computer-lesbaren Medium verwirklicht ist.

14. Computerprogramm mit Computerprogramm-Code, der so ausgebildet ist dass er alle die Schritte des Verfahrens nach Anspruch 4 ausführt, wenn das Programm auf einem Computer abläuft.

15. Computerprogramm nach Anspruch 14, das auf einem Computer-lesbaren Medium verwirklicht ist.

## Revendications

1. Procédé pour permettre de mesurer la qualité de parole pour un appel vocal qui arrive entre un demandeur et une personne appelée par un réseau de communications à base de paquets, ledit procédé comprenant, au niveau d'un noeud
(A) du réseau :
(i) recevoir des paquets pour l'appel vocal ;
(ii) ajouter (32) des informations vocales de test à l'un ou plusieurs des paquets ;
(iii) adresser (33) les paquets vers la personne appelée
et ledit procédé étant **caractérisé en ce que** lesdits paquets sont des paquets RTP de protocole de transport en temps réel et **en ce que** certains des paquets reçus comprennent des informations vocales associées à l'appel vocal et d'autres de ces paquets sont générés dans des périodes où la parole est absente de l'appel vocal, et **en ce que** ladite étape ii) comprend de plus l'identification (31, 32) de ces paquets qui sont générés dans des périodes où la parole est absente de l'appel vocal et l'addition d'informations vocales de test à un ou plusieurs de ces paquets.

2. Procédé selon la revendication 1, dans lequel l'étape ii) comprend de plus la réalisation d'une indication dans un en-tête de chacun de ces paquets auxquels sont ajoutées d'informations vocales de test.

3. Procédé selon la revendication 2, dans lequel ladite indication est une valeur de données utiles.

4. Procédé pour mesurer la qualité de parole d'un appel qui arrive par un réseau de communications à base de paquets, ledit procédé comprenant, au niveau d'un noeud (B) du réseau :
(i) réception des paquets (40) en tant que partie de l'appel vocal, dont certains comprennent des informations vocales associées à l'appel vocal et certains comprennent des informations vocales de test reçues ;
(ii) identification de ces paquets portant lesdites informations vocales de test reçues ; et
(iii) extraction desdites informations vocales de test reçues des paquets identifiés ;
ledit procédé est **caractérisé en ce que** :
les paquets sont des paquets RTP de protocole de transport en temps réel et **en ce que** les informations vocales de test reçues sont portées dans des paquets générés dans des périodes où la parole est absente de l'appel, vocal, et **en ce que** le procédé comprend de plus les opérations consistant à :
(iv) accéder à des informations vocales de test mémorisées ; et
(v) comparer les informations vocales de test extraites et les informations vocales de test mémorisées accédées en utilisant un algorithme d'évaluation de qualité de parole (42) pour obtenir une mesure de la qualité de parole pour l'appel vocal.

5. Procédé selon la revendication 4 qui comprend de plus l'identification des paquets reçus et comprenant les informations vocales de test en déterminant si un identificateur pré-spécifié est présent dans un en-tête de chacun des paquets.

6. Procédé selon la revendication 4 ou 5, dans lequel ledit algorithme d'évaluation de qualité de parole est un algorithme PESQ.

7. Signal pour un appel vocal fourni par un réseau de télécommunications à base de paquets, ledit signal comprenant une pluralité de paquets dont au moins certains comprennent des informations vocales de test, et **caractérisé en ce que** les paquets sont des paquets de protocole de transport en temps réel RTP et dont certains des paquets sont générés dans des périodes où la parole est absente de l'appel vocal et comprennent des informations vocales de test.

8. Signal selon la revendication 7, dans lequel certains des paquets comprennent un en-tête avec un indicateur, indiquant que ces paquets comprennent des informations vocales de test.

9. Noeud de réseau de communications à base de paquets (A) apte à permettre la mesure de la qualité de parole pour un appel vocal qui arrive entre un demandeur (10) et une personne appelée (12) par un réseau de communications à base de paquets comprenant :
(i) une entrée apte à recevoir des paquets pour l'appel vocal ;
(ii) un processeur (23) apte à ajouter des informations vocales de test à un ou plusieurs des paquets ;
(iii) une sortie apte à adresser les paquets vers la personne appelée
et ledit noeud étant **caractérisé en ce que** les paquets sont des paquets de protocole de transport en temps réel RTP et dont certains des paquets reçus comprennent des informations vocales associées à l'appel vocal et d'autres de ces paquets sont générés dans des périodes où la parole est absente de l'appel vocal, et **en ce que** le processeur (23) est de plus apte à identifier ces paquets qui sont générés dans des périodes où la parole est absente de l'appel vocal et ajouter des informations vocales de test à un ou plusieurs de ces paquets.

10. Noeud de réseau de communications à base de paquets (B) apte à mesurer la qualité de parole pour un appel qui arrive entre un demandeur et une personne appelée par un réseau de communications à base de paquets comprenant :
(i) une entrée apte à recevoir des paquets en tant que partie de l'appel vocal, dont certains comprennent des informations vocales associées à l'appel vocal et certains comprennent des informations vocales de test reçues ;
(ii) des moyens pour identifier des paquets portant des informations vocales de test ;
(iii) des a moyens pour extraire lesdites informations vocales de test reçues à partir des paquets identifiés ;
et ledit noeud étant **caractérisé en ce que** les paquets sont des paquets de protocole de transport en temps réel RTP et **en ce que** des informations vocales de test sont portées dans des paquets générés dans des périodes où la parole est absente de l'appel vocal, et **en ce que** le noeud comprend de plus :
(iv) des moyens aptes à mémoriser des informations vocales de test (21) ;
(v) un processeur (22) apte à comparer les informations vocales de test extraites et les informations vocales de test mémorisées en utilisant un algorithme d'évaluation de qualité de parole pour obtenir une mesure de la qualité de parole pour l'appel vocal.

11. Réseau de communications comprenant un premier noeud selon la revendication 9 et un second noeud selon la revendication 10.

12. Programme d'ordinateur comprenant un code de programme informatique apte à effectuer toutes les étapes du procédé de la revendication 1 lorsque le programme fonctionne sur un ordinateur.

13. Programme d'ordinateur selon la revendication 12, incorporant un support informatique pouvant être lu.

14. Programme d'ordinateur comprenant un code de programme informatique apte à effectuer toutes les étapes de procédé de la revendication 4 lorsque le programme fonctionne sur un ordinateur.

15. Programme d'ordinateur selon la revendication 14, incorporé sur un support informatique pouvant être lu.
